# EUROPEAN PATENT APPLICATION

(11) **EP 2 061 207 A1**
(43) Date of publication of application: **20.05.2009**
(21) Application number: 08020177.5
(22) Date of filing: 19.11.2008
(51) Int. Cl.: H04L 29/06

(54) **Method for processing settlement by VoIP terminal and recording medium**

(30) Priority: 19.11.2007 KR 20070117594; 19.11.2007 KR 20070117595; 19.11.2007 KR 20070117596; 19.11.2007 KR 20070117600; 19.11.2007 KR 20070117605
(71) Applicant: Korea Information & Communications Co., Ltd., Youngdeungpo-ku Seoul (KR)
(72) Inventor: Lee, Jang-Hyuk, Seoul (KR)
(74) Representative: Prüfer & Partner GbR European Patent Attorneys

(57) **Abstract**

Provided are a method for processing settlement by a VoIP terminal having a card reader and a plurality of communication units and a recording medium thereof. In the method, a card transaction message containing card transaction data is received through a first communication medium among a plurality of communication media. When the card transaction message is received, the card transaction data is output and card data for the card transaction processing is read through the card reader. Transaction request data containing the card data and the card transaction data is generated, and the generated transaction request data is transmitted to a card transaction server on a communication network through a second communication medium among the communication media.

## Description

### CROSS-REFERENCE TO RELATED APPLICATION

This application claims priority to Korean Patent Applications No. 10-2007-0117594, No. 10-2007-0117595, No. 10-2007-0117596, No. 10-2007-0117600 & No. 10-2007-0117605 all of which were filed on November 19, 2007 and all the benefits accruing therefrom, the contents of which are incorporated by reference in their entirety.

### BACKGROUND

The present disclosure relates to a method for processing settlement by a VoIP terminal having a card reader and a plurality of communication units and a recording medium thereof. In the method, the VoIP compound terminal accessing a plurality of communication media searches and detects communication media suitable for the respective communication environments, uses one of the detected communication media as the first communication medium receiving (or inputting) the card transaction data, and uses another of the detected communication media as the second communication medium for transaction request, thereby making it possible to conveniently process card transactions concentrating on the VoIP terminal regardless of the communication environments. The present disclosure also relates to a computer-readable recording medium storing a program for executing a method for processing settlement by a VoIP terminal having a card reader and a plurality of communication units.

A VoIP (Voice over Internet Protocol) service, which provides a voice communication service and a data communication/multimedia service simultaneously through an IP communication network instead of a pre-existing telephone network, is popularized gradually with the continuous development of information communication technology and the construction of a VoIP infrastructure according to the selection of VoIP providers.

Because the VoIP service uses the IP communication network popularized already in homes, stores and offices, it makes it possible to provide voice communications between VoIP users at a very low cost. Also, the VoIP service is very advantageous in terms of prices, because the service provider pays costs according to the settlement of the cost of the telephone call when the user connect a call through other networks than the VoIP network (e.g., wired telephone networks and mobile telephone networks).

However, the communication media of the IP communication network popularized in homes, stores and offices are not all identical. Some IP communication networks are provided with wired communication media using UTP (Unshielded Twisted Pair) cables, whereas other IP communication networks are provided with wireless communication media using a wireless AP (Access Point). Also, there are many devices accessing the IP communication network in homes, stores and offices, besides the VoIP terminals. Several methods have been proposed to provide card transaction using a VoIP terminal with a card leader. However, because the VoIP terminal connects a communication channel through the public IP communication network, it must be equipped with many security elements for prevention of hacking and information leakage.

### SUMMARY

The present disclosure provides a method for processing card transaction in a VoIP terminal accessing a plurality of communication media and a recording medium thereof, which processes card transaction by selecting a communication medium intelligently in accordance with the communication environments requesting the card transaction, thereby making it possible to provide convenient card transaction concentrating on the VoIP terminal regardless of the communication environments.

In accordance with some exemplary embodiments, a method for processing settlement by a VoIP terminal having a card reader and a plurality of communication units includes: receiving a card transaction message containing card transaction data through a first communication medium among a plurality of communication media; upon reception of the card transaction message, outputting the card transaction data and reading card data for the card transaction processing through the card reader; generating transaction request data containing the card data and the card transaction data; and transmitting the transaction request data to a card transaction server on a communication network through a second communication medium among the communication media.

The receiving of the card transaction message may include: accessing, by a data communication terminal on a communication network, a transaction request server on the communication network, selecting card transaction settlement through the VoIP terminal, and transmitting the VoIP terminal data to the transaction request server; transmitting, by the transaction request server, the received VoIP terminal data and the card transaction data to the card transaction server; generating, by the card transaction server, a card transaction message containing the card transaction data and corresponding to the VoIP terminal data; and transmitting, by the card transaction server, the card transaction message to the VoIP terminal through the first communication medium of the VoIP terminal. The receiving of the card transaction message may include: connecting, by the VoIP terminal, a voice communication channel with a transaction request server on a communication network to select card transaction settlement through the VoIP terminal; detecting, by the transaction request server, the VoIP terminal and transmitting the VoIP terminal data and the card transaction data to the card transaction server; generating, by the card transaction server, a card transaction message containing the card transaction data and corresponding to the VoIP terminal data; and transmitting, by the card transaction server, the card transaction message to the VoIP terminal through the first communication medium of the VoIP terminal.

If the card data contained in the transaction request data is read from a credit card/check card, the method may further include generating, by the card transaction server, a message containing the transaction request data and transmitting generated message to a card company server corresponding to the card data in order to approve the settlement. If the card data contained in the transaction request data is read from a debit card/cash card, the method may further include relaying, by the card transaction server, the transaction request data to a finance company server corresponding to the card data in order to approve the settlement. If a card transaction for ticket reservation/booking is approved through the transaction request data, the method may further include receiving electronic ticket data according to the ticket reservation/booking and storing the electronic ticket data in a storage device.

In accordance with other exemplary embodiments, a computer-readable recording medium stores a program for executing the above method.

### BRIEF DESCRIPTION OF THE DRAWINGS

Exemplary embodiments can be understood in more detail from the following description taken in conjunction with the accompanying drawings, in which:

FIG. 1 is a schematic block diagram of a VoIP compound terminal having a card transaction function based on communication medium identification in accordance with some exemplary embodiments;

FIG. 2 is a schematic block diagram of a VoIP card transaction system based on communication medium identification in accordance with some exemplary embodiments;

FIG. 3 is a flow diagram illustrating an operation process of the VoIP compound terminal for searching a communication terminal for card transaction based on communication medium identification in accordance with some exemplary embodiments;

FIG. 4 is a flow diagram illustrating an operation process of the VoIP compound terminal for processing card transaction based on communication medium identification in accordance with some exemplary embodiments;

FIG. 5 is a flow diagram illustrating an operation process of the VoIP compound terminal for processing card transaction based on communication medium identification in accordance with other exemplary embodiments; and

FIG. 6 is a flow diagram illustrating a transaction process for processing card transaction based on communication medium identification in accordance with some exemplary embodiments.

### DETAILED DESCRIPTION OF EMBODIMENTS

Hereinafter, specific embodiments will be described in detail with reference to the accompanying drawings. The terms used herein are defined according to the functions of the present invention and may vary depending on the intentions of those skilled in the art. Thus, the definition of the terms must be understood based on the overall descriptions made herein.

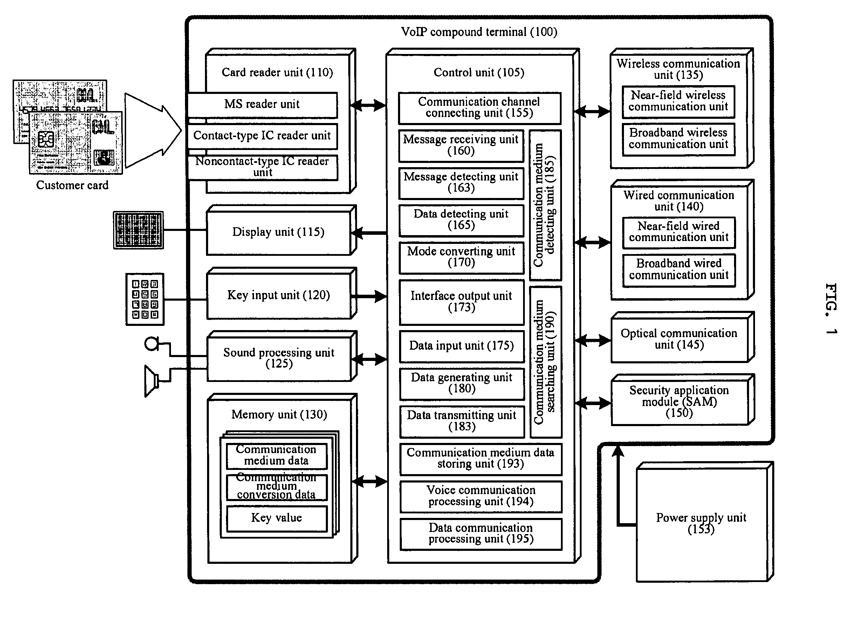

FIG. 1 is a schematic block diagram of a VoIP compound terminal 100 having a card transaction function based on communication medium identification in accordance with some exemplary embodiments. The present embodiments relate to a VoIP terminal accessing multiple communication media including one or more of near-field wireless communication, near-field wired communication, near-field optical communication, and broadband communication, and more particularly, to a VoIP compound terminal 100 that has a function of selecting/processing a communication medium intelligently in accordance with a communication environment requesting card transaction, but the present invention is not limited thereto and includes various modifications and additions thereof that can be made by those skilled in the art. Also, it is preferable that the card transaction based on communication medium identification includes one or more of financial transaction, giro payment, ticket reservation/booking, electronic cash charge, and payment settlement using a card.

Referring to FIG. 1, a VoIP compound terminal 100 for card transaction based on communication medium identification basically includes a control unit 105, a memory unit 130, a key input unit 120, a display unit 115, a sound processing unit 125, a security application module 150, and a power supply unit 153 supplying power to the VoIP compound terminal 100. Also, the VoIP compound terminal 100 further includes one or more wireless communication units 135, one or more wired communication units 140, and one or more optical communication units 145, which communicate with a plurality of communication media; and may further include one or more terminal functional units (not illustrated).

In a functional structure, the controller 105 controls an overall operation of the VoIP compound terminal 100, manages information or data flows between the respective components, and is a general term for the components that interwork or control one or more components that are provided in the VoIP compound terminal 100 for card transaction based on communication medium identification. Also, in terms of hardware, the controller 105 includes one or more processors including a Central Processing Unit (CPU)/ a Micro Processing Unit (MPU), execution memories (e.g., registers and RAMs (Random Access Memories)), and data input/output buses. In terms of software, the controller 105 includes routine or program data that are loaded from a recording medium into the execution memory and are operationally processed by the processor to perform a unique function of the VoIP compound terminal 100. Thus, a program, which is recorded on a recording medium of the VoIP compound terminal 100 for card transaction based on communication medium identification, or components of the VoIP compound terminal 100, which can be processed in a software manner, may be provided in the controller 105.

Also, the memory unit 130 is a general term for the nonvolatile memories that store program data or program codes for control of the overall operation of the VoIP compound terminal 100. Specifically, it is preferable that the memory unit 130 stores a plurality of communication media data including one or more of near-field wireless communication, near-field wired communication, near-field optical communication, and broadband communication, which are provided in the VoIP compound terminal 100, and transaction control data for each communication medium, which are provided to control card transaction based on communication medium identification, in a connected manner.

Also, the communication medium is a general term for the media that are provided for data communication between the VoIP compound terminal 100 and one or more devices (or servers) (hereinafter referred to as communication targets). The communication medium includes a communication network (e.g., a wired communication network and a wireless communication network) connecting the VoIP compound terminal 100 and a communication target, and one or more media including various cables, radio waves (or radio wave transmitting/receiving devices) and communication protocol provided in the communication network. Also, it is preferable that the communication medium includes one or more near-field wireless communication media, one or more near-field wired communication media, one or more optical communication media, and one or more broadband communication media, for data communication between the VoIP compound terminal 100 and the communication target. Also, the near-field wireless communication medium includes one or more packet-switched near-field wireless communication media or one or more direct-communication near-field wireless communication media; the near-field wired communication medium includes one or more packet-switched near-field wired communication media or one or more direct-communication near-field wired communication media; and the broadband communication medium includes one or more wired communication media or one or more wireless communication media. Also, the packet-switched near-field wireless communication medium connects a near-field wireless communication channel between the VoIP compound terminal 100 and a near-field wireless Access Point (AP) or wireless IP sharer, connects a near-field wireless communication channel with one or more near-field communication targets through the wireless AP (or wireless IP sharer), and includes one or more Bluetooth, Wi-Fi or Ultra Wide Band (UWB) systems based on IEEE 802.11.x, to which the present invention is not limited. Also, the direct-communication near-field wireless communication medium connects a near-field wireless communication channel between the VoIP compound terminal 100 and a near-field communication target and includes one or more Radio Frequency (RF) communication, Bluetooth, Wi-Fi or UWB systems supporting a direct communication scheme, to which the present invention is not limited. Also, the packet-switched near-field wired communication medium connects a near-field wired communication channel between the VoIP compound terminal 100 and a near-field hub (or IP sharer or communication modem), connects a near-field wired communication channel with a near-field communication target through the near-field hub (or IP sharer or communication modem), and includes one or more NET BIOS, IPX/SPX or TCP/IP (Transmission Control Protocol/Internet Protocol) standards, to which the present invention is not limited. Also, the direct-communication near-field wired communication medium connects a near-field wired communication channel between the VoIP compound terminal 100 and a near-field communication target and includes one or more USB (Universal Serial Bus) or RS-232c standards supporting a direct communication scheme, to which the present invention is not limited. Also, the optical communication medium directly connects a near-field wired communication channel between the VoIP compound terminal 100 and a near-field communication target through infrared optical communication and includes one or more infrared communications based on the IrDA (Infrared Data Association) and one or more infrared communications based on the IrFM (Infrared Finance Messaging) standards of the IrDA, to which the present invention is not limited. Also, when the VoIP compound terminal 100 accesses a wired communication network, the wired communication medium connects a packet-switched wired communication channel between the VoIP compound terminal 100 and a communication target on the wired communication network. Herein, it is preferable that the wired communication medium provides data communication based on the TCP/IP standards and VoIP voice communication based on the data communication. Also, when the VoIP compound terminal 100 accesses a wired communication network including one or more wireless intervals, the wireless communication medium connects a packet-switched wireless communication channel between the VoIP compound terminal 100 and a communication target on the wireless communication network. Herein, it is preferable that the wireless communication medium provides data communication based on one or more of the IEEE 802.16x standards and the HSDPA (High-Speed Downlink Packet Access) standards and VoIP voice communication based on the data communication. Thus, it is preferable that the communication medium data includes one or more near-field wireless communication medium data, one or more near-field wired communication medium data, one or more optical communication medium data, one or more wired communication medium data, and one or more wireless communication medium data, which correspond to one or more communication media with which the VoIP compound terminal 100 communicates. Herein, the communication medium data corresponding to the non-provided communication medium among these communication media may be omitted.

Also, in processing card transaction by the VoIP compound terminal 100, the transaction control data for each communication medium includes communication medium conversion data for the card transaction processing and one or more key values for each communication medium necessary for the card transaction processing, and may further include one or more settlement-related automatic input data (not illustrated) for the convenience of a user in data input. Also, in processing card transaction by the VoIP compound terminal 100, if the card transaction data for the card transaction processing are received through one of the communication media provided in the VoIP compound terminal 100, it is preferable that the communication medium conversion data contained in the transaction control information for each communication medium includes first communication medium data for receiving the card transaction data and second communication medium data for transmitting transaction request data including the card transaction information and card data read through a card reader unit 110. In this case, if the first communication medium data is detected in the VoIP compound terminal 100, one or more second communication medium data, which are to be converted to process card transaction, are detected in the first communication medium. Also, if card transaction data are not received but are input through the key input unit 120, it is preferable that the communication medium conversion data includes second communication medium data for transmission of transaction request data including card transaction data input through the key input unit 20 and card data read through the card reader unit 110, and the first communication medium connected to the VoIP compound terminal 100 before the card transaction processing may include a communication medium identical to or different from the second communication medium. Also, it is preferable that the key value for each communication medium contained in the transaction control data for each communication medium includes one or more encryption keys (or decryption keys) for securing the confidentiality, authentication, integrity and nonrepudiation of the transaction request data between communication targets receiving the transaction request data. Also, the settlement-related automatic input data contained in the transaction control data for each communication medium may include one or more of data input by the user through the key input unit 120, which may be automatically input (or may be corrected after automatic input), in processing card transaction by the VoIP compound terminal 100.

Also, the card reader unit 110 provides an interface for reading one or more card data provided in the card. The card reader unit 110 includes an MS reader unit for proving an interface between an MS card and the VoIP compound terminal 100, a contact-type IC reader unit for proving an interface between a contact-type IC card and the VoIP compound terminal 100, or a noncontact-type IC reader unit for proving an interface between a noncontact-type IC card and the VoIP compound terminal 100. Also, the card data may include one or more of card number data, valid period data, and card issue company data, which correspond to a customer settlement unit for the card transaction based on communication medium identification; and the card number may include one or more of a credit card number, a check card number, and a prepayment card number. Alternatively, the card data may include one or more of account number (or card number) data and finance company data, which correspond to a customer finance unit for the card transaction based on communication medium identification; the card number may include one or more of a real account number and a virtual account number; and the card number may include one or more of a cash card number, a debit card number, a check card number, and a credit card number.

Also, the key input unit 120 is used to input key data corresponding to data (or signals) input from a key input device with one or more key buttons, and are used to input one or more key data from the key input device during the providing of the card transaction based on communication medium identification. Also, it is preferable that the key input device has a key button for converting an operation mode of the VoIP compound terminal 100 from an initial mode, a voice communication mode or a data communication mode to a transaction mode for one or more communication media for the card transaction based on communication medium identification.

Also, the display unit 115 displays one or more data on an interface screen, which are defined in advance or in real time to be output to a display device of the controller 105, during the period when the VoIP compound terminal 100 performs a predetermined function (e.g., an electronic settlement processing function). For example, the display unit 115 serves to output a process screen, corresponding to the providing of the card transaction based on communication medium identification, to the display device.

Also, the sound processing unit 125 is a functional unit that processes sound input/output in a voice communication mode of the VoIP compound terminal 100. The sound processing unit 125 includes a codec and a vocoder that decode one or more encoded sound data (or voice data) prior to output to a speaker of the VoIP compound terminal 100 or encode sound signals input through a microphone of the VoIP compound terminal 100.

Also, the wireless communication unit 135 includes one or more near-field wireless communication units and one or more broadband wireless communication units.

Also, the near-field wireless communication unit 135 connects a communication with the near-field wireless communication medium in the VoIP compound terminal 100. The near-field wireless communication unit 135 connects a near-field wireless communication channel between a near-field wireless AP or wireless IP sharer, or directly connects a near-field wireless communication channel between the VoIP compound terminal 100 and a near-field communication target. In an embodiment, if the near-field wireless communication unit 135 connects a near-field wireless communication channel between a near-field wireless AP or wireless IP sharer, it includes one or more Bluetooth communication, Wi-Fi communication or UWB communication functions based on IEEE 802.11.x. Also, in another embodiment, if the near-field wireless communication unit 135 directly connects a near-field wireless communication channel between the VoIP compound terminal 100 and a near-field communication target, it includes one or more RF communication, Bluetooth communication, Wi-Fi communication or UWB communication functions supporting a direct communication scheme.

Also, the broadband wireless communication unit 135 connects a communication with the near-field wireless communication medium in the VoIP compound terminal 100. If the VoIP compound terminal 100 accesses a wired communication network including one or more wireless intervals, the broadband wireless communication unit 135 connects a packet-switched wireless communication channel between the VoIP compound terminal 100 and a communication target on the wireless communication network. Also, it is preferable that the broadband wireless communication unit 135 provides data communication based on one or more of the IEEE 802.16x standards and the HSDPA standards and VoIP voice communication based on the data communication.

Also, the wired communication unit 140 includes one or more near-field wired communication units and one or more broadband wired communication units.

Also, the near-field wired communication unit 140 connects a communication with the near-field wired communication medium in the VoIP compound terminal 100. The near-field wired communication unit 140 connects a near-field wired communication channel between a near-field hub (or IP sharer or communication modem), or directly connects a near-field wired communication channel between the VoIP compound terminal 100 and a near-field communication target. In an embodiment, if the near-field wired communication unit 140 connects a near-field wired communication channel between a near-field hub (or IP sharer or communication modem), it includes one or more NET BIOS, IPX/SPX or TCP/IP standards. Also, in another embodiment, if the near-field wired communication unit 140 directly connects a near-field wired communication channel between the VoIP compound terminal 100 and a near-field communication target, it includes one or more USB or RS-232c standards supporting a direct communication scheme. Also, the broadband wired communication unit 140 connects a communication with the near-field wired communication medium in the VoIP compound terminal 100. If the VoIP compound terminal 100 accesses a wired communication network (or intelligent network), the broadband wired communication unit 140 connects a packet-switched wired communication channel between the VoIP compound terminal 100 and a communication target on the wired communication network. Also, it is preferable that the broadband wired communication unit 140 provides data communication based on the TCT/IP standards and VoIP voice communication based on the data communication.

Also, the optical communication unit 145 connects the optical communication medium in the VoIP compound terminal 100. The optical communication unit 145 directly connects a wireless communication channel between the VoIP compound terminal 100 and a near-field communication target through infrared optical communication. Also, the optical communication unit 145 includes one or more infrared communications based on the IrDA standards and one or more infrared communications based on the IrFM standards of the IrDA.

Also, the Secure Application Module (SAM) 150 includes a module that provides confidentiality, authentication, integrity, or Nonrepudiation that are required when the VoIP compound terminal 100 performs the card transaction based on the communication medium identification. In a modified embodiment, the memory of the SAM 150 may replace the memory unit 130 to store a plurality of communication medium data and transaction control data for each communication medium for control of the card transaction based on the communication medium identification, in a connected manner.

Referring to FIG. 1, the VoIP compound terminal 100 includes a communication channel connecting unit 155 connecting a communication channel in a voice communication mode and a voice communication processing unit 194.

The VoIP compound terminal 100 basically provides a VoIP voice communication function. To this end, the communication channel connecting unit 155 connects a communication channel for VoIP voice communication with a VoIP gatekeeper or a VoIP gateway on a communication network in a voice communication mode, in connection with one or more broadband communication units among the wired communication units 140 and the wireless communication units 135. Herein, the communication channel for the VoIP voice communication includes a protocol for performing a call processing operation on one or more communication terminals to connect a call communication, and a protocol for providing communication of messages (e.g., short messages) between the VoIP compound terminal 100 and one or more communication targets. Also, the voice communication processing unit 194 performs a call processing operation on one or more other communication terminals in connection with a VoIP gatekeeper or a VoIP gateway on a communication network. When a call is connected with one or more communication terminals, the voice communication processing unit 194 provides a VoIP voice communication service for the communication terminal through the communication channel.

Referring to FIG. 1, the VoIP compound terminal 100 includes a communication channel connecting unit 155 connecting a communication channel in a data communication mode and a data communication processing unit 195.

In addition to the VoIP voice communication function, the VoIP compound terminal 100 provides a browsing function. To this end, the communication channel connecting unit 155 connects a communication channel for browsing with a web server (e.g., a web server corresponding to HTTT (Hyper-Text Transfer Protocol) compatible protocol, or a web server corresponding to WAP (Wireless Application Protocol) protocol) on a communication network, in connection with one or more broadband communication units among the wired communication units 140 and the wireless communication units 135. Also, the data communication processing unit 195 connects a communication channel for a browsing service with a web server on a communication network through a communication channel corresponding to WAP protocol or HTTP compatible protocol; receives web documents such as HTML (Hyper-Text Markup Language) compatible documents or WML (Wireless Markup Language) compatible documents from the web server; and displays the received web documents through the display unit 115.

Referring to FIG. 1, the VoIP compound terminal 100 includes a communication medium searching unit 190 and a communication medium data storing unit 193.

In an idle mode of the voice communication mode or the data communication mode, the communication medium searching unit 190 periodically connects a communication channel with the VoIP compound terminal 100 and one or more near-field communication targets according to the channel search protocol corresponding to each of the wireless communication unit 135, the wired communication unit 140 and the optical communication unit 145, or connects a communication channel with a communication target on a communication network to search one or more connectable communication media in the VoIP compound terminal 100. Also, if one or more communication media are searched by the communication medium searching unit 190, the communication medium data storing unit 193 stores the searched communication medium data and transaction control data for each communication medium for control of card transaction based on communication medium identification in the memory unit 130 (or the SAM 150), in a connected manner.

Referring to FIG. 1, the VoIP compound terminal 100 includes a communication channel connecting unit 155 and a communication medium detecting unit 185. If the searched communication medium data are stored in the memory unit 130 by the communication medium data storing unit 193, the communication channel connecting unit 155 connects a communication channel between the VoIP compound terminal 100 and a near-field communication target or a communication target on a communication network according to an operation mode of the VoIP compound terminal 100 in connection with one or more of the wireless communication unit 135, the wired communication unit 140 and the optical communication unit 145. The communication medium detecting unit 185 detects a communication medium corresponding to the communication channel connected through the communication channel connecting unit 155.

If the VoIP compound terminal 100 is in a voice communication mode, the communication channel connecting unit 155 connects a communication channel for VoIP voice communication with a VoIP gatekeeper or a VoIP gateway on a communication network in connection with one or more broadband communication units among the wireless communication units 135 and the wired communication units 140. The communication medium detecting unit 185 detects the communication medium connected to the VoIP compound terminal 100 as the wireless communication medium or the wired communication medium for the VoIP voice communication.

If the VoIP compound terminal 100 is in a data communication mode, the communication channel connecting unit 155 connects a communication channel for a browsing service with a web server on a communication network through the communication channel corresponding to the HTTP compatible protocol or the WAP protocol, receives web documents such as HTML compatible documents or WML compatible documents from the web server; and displays the received web documents through the display unit 115. In this case, the communication medium detecting unit 185 detects the communication medium connected to the VoIP compound terminal 100 as the wireless communication medium or the wired communication medium for the data communication.

Alternatively, the communication channel connecting unit 155 connects a near-field communication channel between the VoIP compound terminal 100 and a near-field communication target in response to the communication channel connection request of the near-field communication target, or connects a near-field communication channel between the VoIP compound terminal 100 and a near-field communication target by selection of a card transaction menu provided in the VoIP compound terminal 100. In this case, according to the communication medium connecting the near-field communication channel, the communication medium detecting unit 185 detects the communication medium connected to the VoIP compound terminal 100 as one of the direct-communication wireless communication medium, the packet-switched wired communication medium, the direct-communication wired communication medium and the optical communication medium.

Referring to FIG. 1, the VoIP compound terminal 100 includes a data detecting unit 165, a mode converting unit 170, a communication channel connecting unit 155, an interface output unit 173, and a data input unit 175.If a card transaction menu is selected among a plurality of menus displayed on the display unit 115 by the key input unit 120, the data detecting unit 165 detects first medium data corresponding to a first communication medium detected by the communication medium detecting unit 185 (or a fist communication medium currently connected to the VoIP compound terminal 100), detects one or more communication medium conversion data containing the first medium data in connection with the memory unit 130, reads the communication medium conversion data to detect one or more second communication medium data convertible in the first communication medium.

Also, if one second communication medium convertible in the first communication medium is detected, the mode converting unit 170 converts the operation mode of the VoIP compound terminal 100 to the transaction mode for each communication medium corresponding to the detected second communication medium data and the first communication medium data. If two second communication media convertible in the first communication medium is detected, the mode converting unit 170 outputs a mode selection interface for selection of one of two or more second communication media to process the card transaction, and converts, when the card transaction target second communication medium is selected, the operation mode of the VoIP compound terminal 100 to the transaction mode for each communication medium corresponding to the detected second communication medium data and the first communication medium data. Herein, it is preferable that the transaction mode for each communication medium transmits the transaction request data generated by the VoIP compound terminal 100 to a near-field communication target of the VoIP compound terminal 100 through one of the packet-switched near-field wireless communication medium, the direct-communication near-field wireless communication medium, the packet-switched near-field wired communication medium, the direct-communication near-field wired communication medium and the optical communication medium, or transmits the transaction request data to the communication target on the communication network through the wired communication medium or the wireless communication medium to include a transaction mode for processing the card transaction.

Also, the communication channel connecting unit 155 transmits transaction request data through the second communication medium to connect a communication channel for processing the card transaction. Herein, it is preferable that the communication channel connecting unit 155 connects each communication channel for transmission of the transaction request data to the VoIP compound terminal 100 and a near-field communication target through one of the packet-switched near-field wireless communication medium, the direct-communication near-field wireless communication medium, the packet-switched near-field wired communication medium, the direct-communication near-field wired communication medium and the optical communication medium, or connects a broadband communication channel through the wired communication medium or the wireless communication medium.

Also, when the communication channel is connected through the second communication medium, the interface output unit 173 outputs a data input interface for receiving card transaction data for card transaction processing through the second communication medium by the key input unit 120 and a card transaction interface for receiving card data read from a customer card through the card reader unit 110, and may further output a user interface for receiving transaction security data (e.g., a card secret number and a one-time password authenticated in a platform OTP (a card transaction server 200)). Herein, the card transaction data may include franchise store data and transaction money amount data to process one of card transactions including settlement, banking, giro payment, ticket reservation/booking, and electronic cash by card settlement through a credit card/check card, or may include deposit account data and transaction money amount data to process the card transaction by account transfer settlement through a debit card/cash card.

Also, the data input unit 175 inputs card transaction data corresponding to the data input interface through the key input unit 120, and inputs card data from the customer card through the card reader unit 110 on the basis of a card transaction interface.

Referring to FIG. 1, the VoIP compound terminal 100 includes a message receiving unit 160, a message detecting unit 163, a data detecting unit 165, a communication channel connecting unit 155, a mode converting unit 170, an interface output unit 173, and a data input unit 175.

If the VoIP compound terminal 100 is connected to the first communication medium, the VoIP compound terminal 100 one or more message data according to the message exchange protocol defined in the first communication medium and the message receiving unit 160 receives a card transaction message for card transaction based on communication medium identification from the first communication medium connected by the communication channel connecting unit 155, according to the message exchange protocol corresponding to the first communication medium.

If the card transaction message is received, the message detecting unit 163 reads the received card transaction message to detect whether card transaction data are contained therein. Also, the card transaction data contained in the card transaction message may include franchise store data and transaction money amount data to process one of card transactions including settlement, banking, giro payment, ticket reservation/booking, and electronic cash by card settlement through a credit card/check card, or may include deposit account data and transaction money amount data to process the card transaction by account transfer settlement through a debit card/cash card. In addition, the card transaction data may further include one or more PG identification data, settlement page URL data and card transaction route code data.

If the inclusion of the card transaction data in the card transaction message is detected by the message detecting unit 163, the data detecting unit 165 detects the first communication medium receiving the card transaction message in connection with the communication medium detecting unit 185, detects one or more communication medium conversion data including the first medium data in connection with the memory unit 130, and reads the communication medium conversion data to detect one or more second communication medium data convertible in the first communication medium. In an embodiment, the data detecting unit 165 automatically detects the wireless communication medium or the wired communication medium connected to the VoIP compound terminal 100, among the communication medium data stored in the memory unit 130. In another embodiment, if the settlement page URL is contained in the card transaction data, the data detecting unit 165 automatically detects one of the packet-switched near-field wireless communication medium, the direct-communication near-field wireless communication medium, the packet-switched near-field wired communication medium, the direct-communication near-field wired communication medium and the optical communication medium by the second communication medium, which connects a communication with a near-field communication target of the VoIP compound terminal 100 accessing the settlement page among the communication medium data stored in the memory unit 130, and may automatically detect the wireless communication medium or the wired communication medium connected to the VoIP compound terminal 100 by the second communication medium even if the settlement page URL is contained. In still another embodiment, if the card transaction route code data are contained in the card transaction data, the data detecting unit 165 automatically detects one of the packet-switched near-field wireless communication medium, the direct-communication near-field wireless communication medium, the packet-switched near-field wired communication medium, the direct-communication near-field wired communication medium, the optical communication medium, the wireless communication medium and the wired communication medium corresponding to the card transaction route code data by the second communication medium, among the communication medium data stored in the memory unit 130.

If the second communication medium to process the card transaction is detected by the data detecting unit 165, the communication channel connecting unit 155 connects a communication channel for processing the card transaction through the detected second communication medium and the mode converting unit 170 converts the operation mode of the VoIP compound terminal 100 into a transaction mode for each communication medium, including the first communication medium data receiving the card transaction message and the second communication medium data connected by the communication channel connecting unit 155.

Also, the interface output unit 173 outputs a card transaction interface for each communication medium, which receives transaction security data for card transaction process through the second communication medium through the key input unit 120 and receives card data read from the customer card through the card reader unit 110.

Also, the data input unit 175 inputs the transaction security data through the key input unit 120.

Referring to FIG. 1, the VoIP compound terminal 100 includes a data generating unit 180 and a data transmitting unit 183.

If the card data, the card transaction data and the transaction security data are input through the data input unit 175, the data generating unit 180 generates transaction request data corresponding to the second communication medium, including one or more of the card data, the card transaction data and the transaction security data.

If the transaction request data are generated, the data transmitting unit 183 transmits the transaction request data through the communication channel connected through the second communication medium. In this case, if one or more key values are contained in the transaction control data for each communication medium containing the second communication medium data, it is preferable that the data transmitting unit 183 encrypts the transaction request data by the key values prior to transmission.

If the card transaction corresponding to the transaction request data is processed after transmission of the transaction request data by the data transmitting unit 183, a message containing the card transaction result data is received through the message receiving unit 160 and the received message is displayed through the display unit 115.

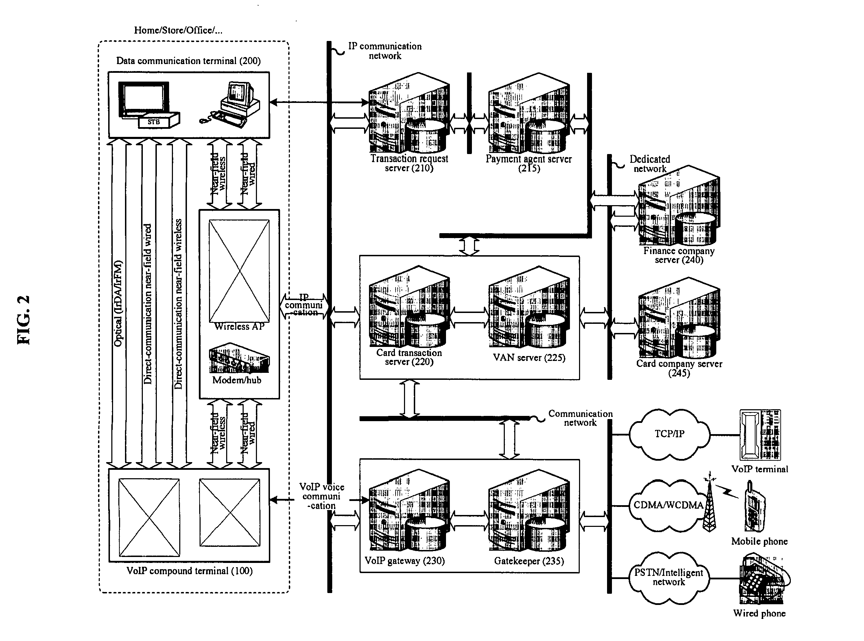

FIG. 2 is a schematic block diagram of a VoIP card transaction system based on communication medium identification in accordance with some exemplary embodiments. The present embodiments relate to a system for processing card transaction by using the VoIP compound terminal 100 connected to one of broadband communication media including one or more wireless communication media and wired communication media, or near-field communication media including one or more packet-switched near-field wireless communication media, direct-communication near-field wireless communication media, packet-switched near-field wired communication media, direct-communication near-field wired communication media and optical communication media, but the present invention is not limited thereto and includes various modifications and additions thereof that can be made by those skilled in the art.

Referring to FIG. 2, a VoIP card transaction system based on the communication medium identification includes: a VoIP compound terminal 100 provided in, for example, a home, a store or an office; a client system including various data communication terminals 200 and various communication devices; a card transaction system including a transaction request server 210 (e.g., an Internet shopping mall server, a home shopping server, a ticket reservation/booking server, an electronic cash charging server, and an ARS server), a payment agent server 215, a VAN server 225, a finance company server 240, and a card company server 245; a card transaction server 220 providing a platform for control of various card transactions through the VoIP compound terminal 100; and a VoIP system including a gatekeeper 235 and a gateway 230 connected to the VoIP compound terminal 100.

The card transaction server 220 communicates with the VoIP compound terminal 100 through a broadband communication medium provided in the VoIP compound terminal 100. In an embodiment, if a card transaction menu is selected in the VoIP compound terminal 100 to provide card transaction based on communication medium identification, the card transaction server 220 includes a management platform for managing the VoIP compound terminal 100 and various server platforms for the card transaction provided by selection of the card transaction menu in the VoIP compound terminal 100, and a terminal platform connected with the server platform is provided to the VoIP compound terminal 100. In another embodiment, if a card transaction menu is received in the VoIP compound terminal 100 to provide card transaction based on communication medium identification, the card transaction server 220 includes a management platform for managing the VoIP compound terminal 100, a server platform and a communication platform allowing the VoIP compound terminal 100 to receive a card transaction message through a first communication medium, and a terminal platform connected with the server platform is provided to the VoIP compound terminal 100. Herein, it is preferable that the management platform provided in the card transaction server 220 manages the inclusion of the terminal platform in the VoIP compound terminal 100 and manages a first communication medium and a second communication medium provided in the VoIP compound terminal 100.

Also, the communication platform of the card transaction server 220 includes a communication function. Herein, the data communication terminal 200 accesses the transaction request server 210 to select card transaction settlement based on the VoIP compound terminal 100, or the VoIP compound terminal 100 connects a voice communication channel with the transaction request server 210 to select card transaction settlement based on the VoIP compound terminal. Then, the communication platform transmits VoIP terminal data corresponding to the VoIP compound terminal 100 to the transaction request server 210. Then, the transaction request server 210 detects the VoIP terminal data and transmits the VoIP terminal data and the card transaction data to the card transaction server 220. Then, the communication platform receives the VoIP terminal data and the card transaction data from the transaction request server 210. Also, the communication platform includes an additional communication function. Herein, if the VoIP terminal data and the card transaction data are received from the transaction request server 210, the VoIP terminal corresponding to the VoIP terminal data including the card transaction data generates a card transaction message to be received through the first communication medium and the card transaction message is transmitted to the VoIP terminal through the first communication medium of the VoIP terminal.

The settlement platform of the card transaction server 220 includes a settlement function for receiving transaction request data that is transmitted from the VoIP compound terminal 100 through the second communication medium and includes card transaction data contained in the card transaction message and card data read through a card reader. In an embodiment, if the card data contained in the transaction request data is read from a credit card/check card, the settlement platform includes a settlement function that generates a message containing the transaction request data and transmits the generated message to the card company server 245 corresponding to the card data so that the settlement is approved. In another embodiment, if the card data contained in the transaction request data is read from a debit car/cash card, the settlement platform includes a settlement function that transmits the transaction request data to the finance company server 240 corresponding to the card data so that the settlement is approved.

Also, the terminal platform connected with the settlement platform receives a card transaction message through the card transaction server 220 or the transaction request server 210 and detects whether card transaction data are contained in the card transaction message. If the card transaction data are contained, the terminal platform includes a terminal function that reads card data through a card reader, generates transaction request data containing the card data and the transaction data, and transmits the generated transaction request data to the card transaction server 220 through the second communication medium. Also, if a card transaction for ticket reservation/booking is approved through the transaction request data, it is preferable that the terminal platform includes a terminal function that receives, by the VoIP compound terminal 100, electronic ticket data corresponding to the ticket reservation/booking from the card transaction server 200 or a ticket reservation/booking server, and stores the electronic ticket data in the electronic ticket storing device (e.g., an ID card inserted in a card reader, or a memory provided in the VoIP compound terminal 100).

Also, the VoIP compound terminal 100 connects a broadband communication with one or more of a transaction request server 210 on an IP communication network, a card transaction server 220, a VAN server 225 and an VoIP gateway 230 through broadband communication media including one or more of a wireless communication medium and a wired communication medium, and connects a near-field communication with the VoIP terminal, various near-field data communication terminals 200 and various communication devices through near-field communication media including one or more one or more packet-switched near-field wireless communication media, direct-communication near-field wireless communication media, packet-switched near-field wired communication media, direct-communication near-field wired communication media and optical communication media. Also, the data communication terminal 200 includes terminal devices with an IP communication network access function, such as personal computers, notebook computers, and set-top boxes provided in, for example, a home, a store or an office. Also, in order to provide card transaction based on communication medium identification by the VoIP compound terminal 100, it is preferable that the data communication terminal 200 accesses a transaction request server 210 through an IP communication network, provides data of the VoIP compound terminal 100 to the transaction request server 210 so that the transaction request server 210 transmits a card transaction message to the VoIP compound terminal 100, or the transaction request server 210 relays a card transaction message to the VoIP compound terminal 100 through the card transaction server 220. Also, it is preferable that the data communication terminal 200 accesses a transaction request sever 210 through the IP communication network, receives a card transaction message from the transaction request server 210, and relays the card transaction message to the VoIP compound terminal 100 through near-field communication connected with the VoIP compound terminal 100.

In an embodiment, if a card transaction menu is selected in the VoIP compound terminal 100 to provide card transaction based on communication medium identification, the first communication medium of the VoIP compound terminal 100 includes a communication medium corresponding to a communication unit to which the VoIP compound terminal 100 is connected immediately before the card transaction, and the second communication medium converted from the first communication medium includes one or more broadband communication media through which the VoIP compound terminal 100 connects a broadband communication with the card transaction server 220 and one or more broadband communication media through which the VoIP compound terminal 100 connects a broadband communication with the VAN server 225. Also, on demand, the second communication medium may further include a near-field communication medium connected by near-field communication with the data communication terminal 200 connected by communication with one of the transaction request server 210, the payment agent server 210, the card transaction server 220 and the VAN server 225. Herein, the card transaction menu may include one or more of a settlement menu, a banking menu, a giro payment menu, a ticket reservation/booking menu, and an electronic cash charge menu. Also, the settlement menu includes one or more of a card settlement menu using a credit card/check card and an account transfer settlement menu using a debit card/cash card, according to card data read through the card reader of the VoIP compound terminal 100. Also, the banking menu includes one or more of an account transfer menu and an account check menu using debit card/cash card data read from the card reader of the VoIP compound terminal 100. Also, the giro payment menu includes one or more of a card settlement payment menu using a credit card/check card and an account transfer settlement payment menu using a debit card/cash card, according to card data read through the card reader of the VoIP compound terminal 100. Also, the ticket reservation/banking menu includes one or more of a card settlement reservation/booking menu using a credit card/check card and an account transfer settlement reservation/booking menu using a debit card/cash card, according to card data read through the card reader of the VoIP compound terminal 100. In particular, it is preferable that the ticket reservation/booking, the card transaction server 220 (or the ticket reservation/booking server) provides electronic ticket data corresponding to the ticket reservation/booking to the VoIP terminal and in response to this, the VoIP compound terminal 100 records the electronic ticket data on the IC card, on which the electronic ticket is to be recorded, through the card reader. Also, the electronic cash charge menu includes one or more of a card settlement charge menu using a credit card/check card and an account transfer settlement charge menu using a debit card/cash card, according to card data read through the card reader of the VoIP compound terminal 100. Also, the card settlement and the account transfer settlement, the account check and the account transfer, the card settlement payment and the account transfer settlement payment, the card settlement reservation/booking and the account transfer settlement reservation/booking, and the card settlement charge and the account transfer settlement charge are provided through the card transaction system, in connection with the server platform of the card transaction server 220, on the basis of the terminal platform provided by the card transaction server 220.

In another embodiment, if a card transaction message is received in the VoIP compound terminal 100 to provide card transaction based on communication medium identification, the first communication medium of the VoIP compound terminal 100 includes one or more of a near-field communication medium and broadband communication medium receiving the card transaction message, and the second communication medium converted from the first communication medium includes one or more broadband communication media through which the VoIP compound terminal 100 connects a broadband communication with the card transaction server 220 and one or more broadband communication media through which the VoIP compound terminal 100 connects a broadband communication with the VAN server 225. Also, on demand, the second communication medium may further include a near-field communication medium connected by near-field communication with the data communication terminal 200 connected by communication with one of the transaction request server 210, the payment agent server 210, the card transaction server 220 and the VAN server 225. Herein, the card transaction message may include, because of a message structure, one or more of an Internet message defined in the IP communication network (e.g., a mail message and a messenger message) and a VoIP message (e.g., a VoIP short message relayed through the VoIP gateway 230 and the gatekeeper 235); and may include, because of a message data structure, one or more of a settlement message, a banking message, a giro payment message, a ticket reservation/booking message, and an electronic cash charge message. Also, the settlement message includes one or more of a card settlement message using a credit card/check card and an account transfer settlement message using a debit card/cash card, according to card data read through the card reader of the VoIP compound terminal 100. Also, the banking message includes one or more of an account transfer message and an account check message using debit card/cash card data read from the card reader of the VoIP compound terminal 100. Also, the giro payment message includes one or more of a card settlement payment message using a credit card/check card and an account transfer settlement payment message using a debit card/cash card, according to card data read through the card reader of the VoIP compound terminal 100. Also, the ticket reservation/banking message includes one or more of a card settlement reservation/booking message using a credit card/check card and an account transfer settlement reservation/booking message using a debit card/cash card, according to card data read through the card reader of the VoIP compound terminal 100. In particular, it is preferable that the ticket reservation/booking, the card transaction server 220 (or the ticket reservation/booking server) provides electronic ticket data corresponding to the ticket reservation/booking to the VoIP terminal and in response to this, the VoIP compound terminal 100 records the electronic ticket data on the IC card, on which the electronic ticket is to be recorded, through the card reader. Also, the electronic cash charge message includes one or more of a card settlement charge message using a credit card/check card and an account transfer settlement charge message using a debit card/cash card, according to card data read through the card reader of the VoIP compound terminal 100. Also, the card settlement and the account transfer settlement, the account check and the account transfer, the card settlement payment and the account transfer settlement payment, the card settlement reservation/booking and the account transfer settlement reservation/booking, and the card settlement charge and the account transfer settlement charge are provided through the card transaction system, in connection with the server platform of the card transaction server 220, on the basis of the terminal platform provided by the card transaction server 220.

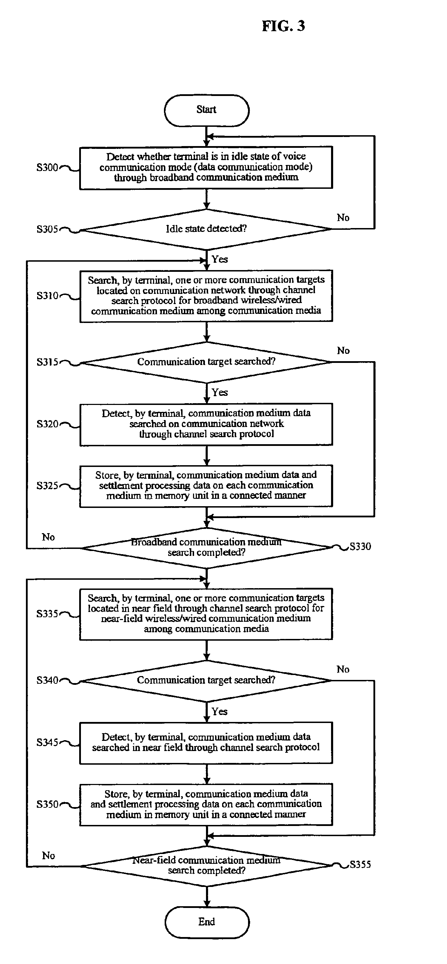

FIG. 3 is a flow diagram illustrating an operation process of the VoIP compound terminal 100 for searching a communication terminal for card transaction based on communication medium identification in accordance with some exemplary embodiments. The present embodiments relate to an operation process of the VoIP compound terminal 100 for searching one or more communication media capable of providing card transaction based on communication medium identification, among broadband communication media including one or more of a wireless communication medium and a wired communication medium and near-field communication media including one or more of a packet-switched near-field wireless communication medium, a direct-communication near-field wireless communication medium, a packet-switched near-field wired communication medium, a direct-communication near-field wired communication medium and an optical communication medium, when the VoIP compound terminal 100 is in an idle mode of the voice communication mode or the data communication mode, but the present invention is not limited thereto and includes various modifications and additions thereof that can be made by those skilled in the art. Hereinafter, for the sake of convenience, the VoIP compound terminal 100 will be referred to as a terminal, and a device (or server) connecting a communication channel with the terminal will be referred to a communication target.

Referring to FIG. 3, the terminal basically provides a VoIP voice communication function or a data communication function through broadband communication media including one or more of a wireless communication medium and a wired communication medium. The terminal detects whether it is in a voice communication mode idle mode or a data communication mode idle mode (S300).

If the terminal is detected to be in a voice communication mode idle mode or a data communication mode idle mode (S305), the terminal attempts to connect a communication channel for the card transaction processing with one or more communication targets on the communication network according to the channel search protocol corresponding to the broadband communication media including one or more of a wireless communication medium and a wired communication medium among a plurality of communication media, to detect whether a communication target is detected on the communication network (S310).

If the communication target is detected on the communication network (S315), the terminal detects communication medium data corresponding to the communication target searched on the communication network through the channel search protocol (S320), stores the communication medium data and the settlement process data for each communication medium in the memory unit (or the SAP) in a connected manner (S325). The above steps repeated periodically with respect to all of the broadband communication media connectable to the terminal (S330).

If the broadband communication medium search is completed (S330), the terminal attempts to connect a communication channel for the card transaction processing with one or more near-field communication targets according to the channel search protocol corresponding to the near-field communication media including one or more of a packet-switched near-field wireless communication medium, a direct-communication near-field wireless communication medium, a packet-switched near-field wired communication medium, a direct-communication near-field wired communication medium and an optical communication medium among a plurality of communication media, to detect whether the near-field communication is searched (S335).

If the near-field communication target is searched (S340), the terminal detects communication medium data corresponding to the near-field communication target searched through the channel search protocol (S345), stores the communication medium data and the settlement process data for each communication medium in the memory unit (or the SAP) in a connected manner (S350). The above steps repeated periodically with respect to the near-field communication media connectable to the terminal (S355).

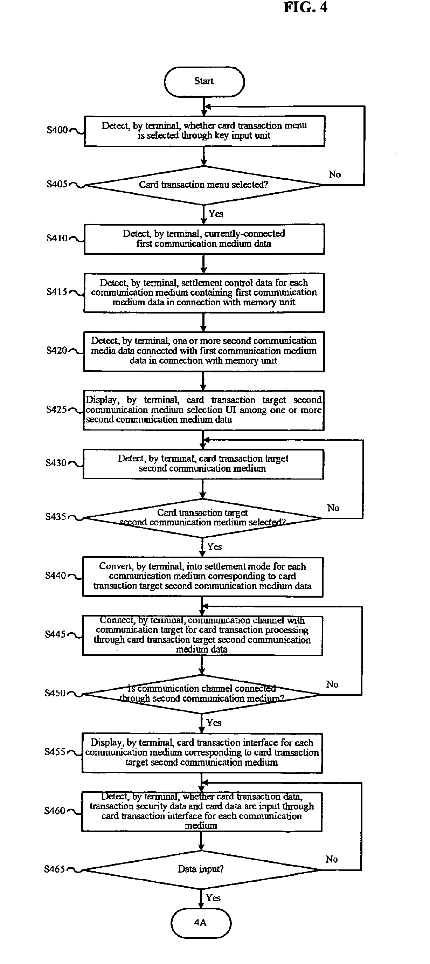

FIG. 4 is a flow diagram illustrating an operation process of the VoIP compound terminal 100 for processing card transaction based on communication medium identification in accordance with some exemplary embodiments. The present embodiments relate to an operation process of the VoIP compound terminal 100 for processing card transaction according to the selection of the card transaction menu by converting from the first communication medium, with which the VoIP compound terminal 100 is currently connected, to the card transaction target second communication medium, among the communication media searched through the communication medium search process of FIG. 3 at the selection of the card transaction menu in the VoIP compound terminal 100 of FIG. 1, but the present invention is not limited thereto and includes various modifications and additions thereof that can be made by those skilled in the art. Hereinafter, for the sake of convenience, the VoIP compound terminal 100 will be referred to as a terminal, and a device (or server) connecting a communication channel with the terminal will be referred to a communication target.

Referring to FIG. 4, the terminal displays a plurality of menus including one or more of a settlement menu, a banking menu, a giro payment menu, a ticket reservation/booking menu, and an electronic cash charge menu, and detects whether a specific card transaction menu among the above menus is selected through the key input unit of the terminal (S400).

If the card transaction menu is selected (S405), the terminal detects the first communication medium currently connected thereto (S410), detects transaction control data for each communication medium containing the first communication medium data in connection with the memory unit (S415), and reads communication medium conversion data contained in the detected transaction control data to detect one or more second communication medium data capable of connecting a communication channel with the communication target for the card transaction among the second communication medium data connected with the first communication medium data (S420).

Thereafter, the terminal displays an user interface for selecting the card transaction target second communication medium data among one or more second communication medium data detected (S425), and detects whether the card transaction target second communication medium data are selected through the user interface (S430). In a modified embodiment, if only one card transaction target second communication medium data is detected, the step of displaying the user interface for selection of the card transaction target second communication medium data may be omitted.

If the card transaction target second communication medium data is selected (S435), the terminal converts the operation mode into the transaction mode for each communication medium corresponding to the card transaction target second communication medium data (S440).

Thereafter, the terminal connects a communication channel with the communication target for the card transaction processing through the card transaction target second communication medium data (S445).

If the communication channel is connected with the device or server through the card transaction target second communication medium data (S450), the terminal displays the card transaction interface for each communication medium corresponding to the card transaction target second communication medium data (S455), and detects whether the card transaction data, the transaction security data and the card data are input through the card transaction interface for each communication medium (S460).

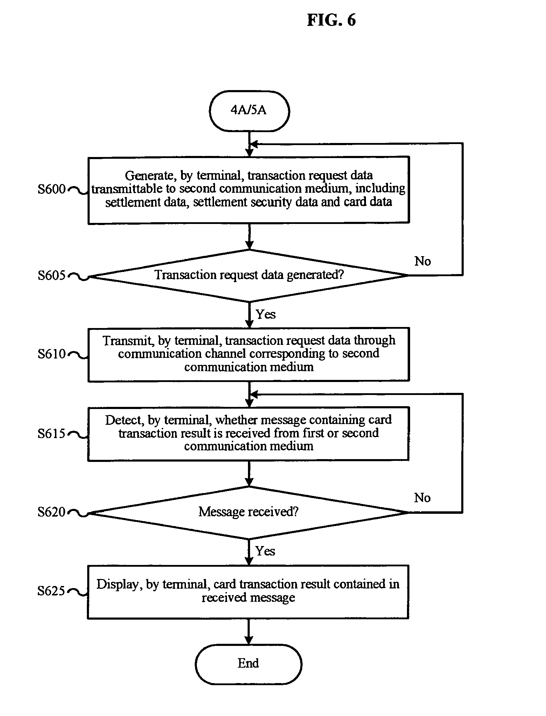

If the above data are input (S465), the terminal performs a transaction process illustrated in FIG. 6 (4A).

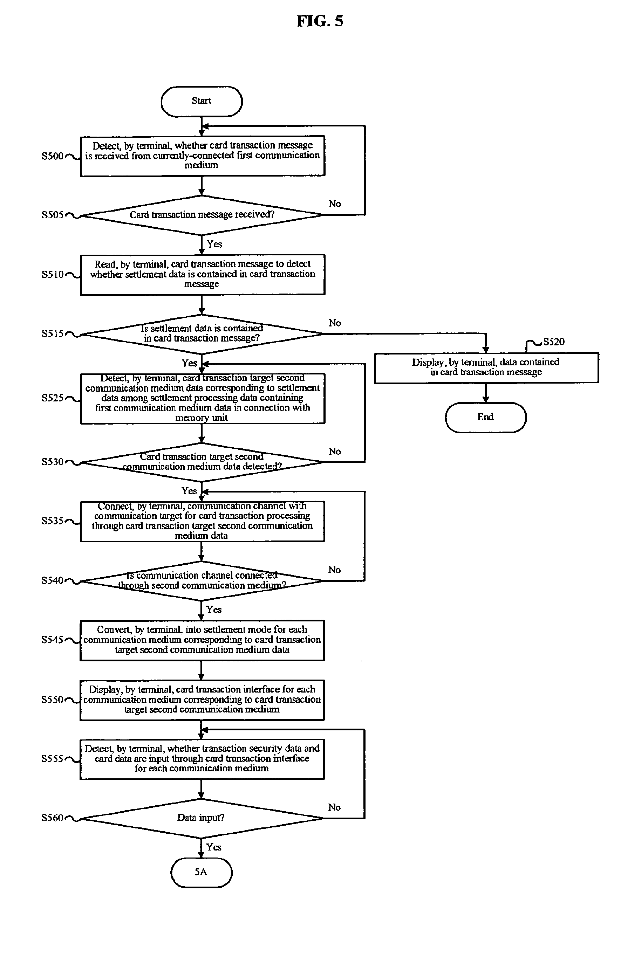

FIG. 5 is a flow diagram illustrating an operation process of the VoIP compound terminal 100 for processing card transaction based on communication medium identification in accordance with other exemplary embodiments. The present embodiments relate to an operation process of the VoIP compound terminal 100 for processing card transaction by automatically detecting the second communication medium corresponding to card transaction data when receiving a card transaction message containing the card transaction data from the first communication medium among the communication media searched through the communication medium search process of FIG. 3, but the present invention is not limited thereto and includes various modifications and additions thereof that can be made by those skilled in the art. Hereinafter, for the sake of convenience, the VoIP compound terminal 100 will be referred to as a terminal, and a device (or server) connecting a communication channel with the terminal will be referred to a communication target.

Referring to FIG. 5, the terminal detects whether a card transaction message is received from the currently-connected first communication medium searched through the communication medium search process of FIG. 3 (S500).

If the card transaction message is received from the first communication medium (S505), the terminal reads the received card transaction message to detect whether card transaction data for the card transaction processing is contained therein (S510).

If the card transaction data is not contained in the card transaction message (S515), the terminal displays data contained in the card transaction message (S520). If the card transaction data is contained in the card transaction message (S515), the terminal reads communication medium conversion data contained in transaction control data containing the first communication medium data in connection with the memory unit to detect the second communication medium data capable of connecting a communication channel with the communication target for the card transaction among the second communication medium data connected with the first communication medium data (S525).

If the card transaction target second communication medium data corresponding to the card transaction data is detected (S530), the terminal a communication channel with the device of server for the card transaction processing through the card transaction target second communication medium data (S535).

If the communication channel is connected with the communication target through the card transaction target second communication medium data (S540), the terminal converts the operation mode into the transaction mode for each communication medium corresponding to the card transaction target second communication medium data (S545).

Thereafter, the terminal displays the card transaction interface for each communication medium corresponding to the card transaction target second communication medium data (S550), and detects whether the card transaction data, the transaction security data and the card data are input through the card transaction interface for each communication medium (S555).

If the above data are input (S560), the terminal performs a transaction process illustrated in FIG. 6 (5A).

FIG. 6 is a flow diagram illustrating a transaction process for processing card transaction based on communication medium identification in accordance with some exemplary embodiments. The present embodiments relate to an operation process of generating, by the VoIP compound terminal 100, transaction request data containing one or more of card transaction data, transaction security data and card data input through the card transaction process of FIG. 4 or 5 and transmitting the generated transaction request data through the second communication medium, but the present invention is not limited thereto and includes various modifications and additions thereof that can be made by those skilled in the art. Hereinafter, for the sake of convenience, the VoIP compound terminal 100 will be referred to as a terminal, and a device (or server) connecting a communication channel with the terminal will be referred to a communication target.

Referring to FIG. 6, if the card transaction data, the transaction security data and the card data are input through the card transaction process of FIG. 4 or 5 (4A or 5A), the terminal generates transaction request data transmittable to the second communication medium corresponding to the communication channel connected in the card transaction process of FIG. 4 or 5, including the input card transaction data, the transaction security data and the card data (S600).

If the transaction request data is generated (S605), the terminal transmits the transaction request data through the communication channel corresponding to the second communication medium (S610), and detects whether a message containing the card transaction results is received through the first communication medium (e.g., the communication medium before the card transaction processing by the terminal, or the communication medium receiving the card transaction message) or the second communication medium (e.g., the communication medium transmitting the transaction request data) (S615).

If the message containing the card transaction results is received (S620), the terminal displays the card transaction results contained in the received message (S625). Also, if card transaction for ticket reservation/booking is approved through the transaction request data, the terminal receives electronic ticket data according to ticket reservation/booking from the card transaction server 220 or the ticket reservation/booking server and records the electronic ticket data in the electronic ticket storing unit (e.g., the IC card inserted in the card reader, or the memory provided in the VoIP compound terminal 100).

According to the present invention as described above, the VoIP compound terminal, which simultaneously provides a voice communication service, a data communication service and a multimedia server through an IP-based communication network, searches and detects communication media suitable for the respective communication environments, uses one of the detected communication media as the first communication medium receiving (or inputting) the card transaction data, and uses another of the detected communication media as the second communication medium for transaction request, thereby making it possible to conveniently process card transactions (e.g., an on-line transaction through the VoIP terminal and the near-field data communication terminal, a voice communication transaction through a call connection, a terminal transaction by selection a card transaction menu provided in the VoIP terminal) concentrating on the VoIP terminal regardless of the communication environments. Also, because the communication medium is allocated dynamically at the card transaction time by the VoIP terminal with a card transaction based on communication medium identification, the security can be maintained and the card transaction can be provided stably at a low cost.

Although the method for processing settlement by the VoIP terminal and the recording medium thereof have been described with reference to the specific embodiments, they are not limited thereto. Therefore, it will be readily understood by those skilled in the art that various modifications and changes can be made thereto without departing from the spirit and scope of the present invention defined by the appended claims.

## Claims

1. A method for processing settlement by a VoIP terminal having a card reader and a plurality of communication units, the method comprising:
receiving a card transaction message containing card transaction data through a first communication medium among a plurality of communication media;
upon reception of the card transaction message, outputting the card transaction data and reading card data for the card transaction processing through the card reader;
generating transaction request data containing the card data and the card transaction data; and
transmitting the transaction request data to a card transaction server on a communication network through a second communication medium among the communication media.

2. The method of claim 1, wherein the receiving of the card transaction message comprises:
accessing, by a data communication terminal on a communication network, a transaction request server on the communication network, selecting card transaction settlement through the VoIP terminal, and transmitting the VoIP terminal data to the transaction request server;
transmitting, by the transaction request server, the received VoIP terminal data and the card transaction data to the card transaction server;
generating, by the card transaction server, a card transaction message containing the card transaction data and corresponding to the VoIP terminal data; and
transmitting, by the card transaction server, the card transaction message to the VoIP terminal through the first communication medium of the VoIP terminal.

3. The method of claim 1, wherein the receiving of the card transaction message comprises:
connecting, by the VoIP terminal, a voice communication channel with a transaction request server on a communication network to select card transaction settlement through the VoIP terminal;
detecting, by the transaction request server, the VoIP terminal and transmitting the VoIP terminal data and the card transaction data to the card transaction server;
generating, by the card transaction server, a card transaction message containing the card transaction data and corresponding to the VoIP terminal data; and
transmitting, by the card transaction server, the card transaction message to the VoIP terminal through the first communication medium of the VoIP terminal.

4. The method of claim 1, further comprising:
if the card data contained in the transaction request data is read from a credit card/check card, generating, by the card transaction server, a message containing the transaction request data and transmitting generated message to a card company server corresponding to the card data in order to approve the settlement.

5. The method of claim 1, further comprising:
if the card data contained in the transaction request data is read from a debit card/cash card, relaying, by the card transaction server, the transaction request data to a finance company server corresponding to the card data in order to approve the settlement.

6. The method of claim 1, further comprising:
if a card transaction for ticket reservation/booking is approved through the transaction request data, receiving electronic ticket data according to the ticket reservation/booking and storing the electronic ticket data in a storage device.

7. A computer-readable recording medium that stores a program for executing the method of one of claims 1 to 6.
